Europäisches Patentamt

European Patent Office

Office européen des brevets

(19)

(11) Numéro de publication: **0 041 015**
**B1**

(12) **FASCICULE DE BREVET EUROPEEN**

(45) Date de publication du fascicule du brevet: **31.07.85**

(21) Numéro de dépôt: **81400796.9**

(22) Date de dépôt: **21.05.81**

(51) Int. Cl.⁴: **F 01 D 5/18,** B 23 P 15/04, F 01 D 5/28

(54) *Procédé pour la fabrication d'aubes de turbine refroidies au moyen d'un corps poreux et produit obtenu suivant ce procédé.*

(30) Priorité: **28.05.80 FR 8011769**

(43) Date de publication de la demande:
**02.12.81 Bulletin 81/48**

(45) Mention de la délivrance du brevet:
**31.07.85 Bulletin 85/31**

(84) Etats contractants désignés:
**DE FR GB**

(56) Documents cités:
**FR-A- 972 994**
**FR-A-2 174 639**
**FR-A-2 400 665**
**FR-A-2 435 534**
**GB-A- 23 855**
**US-A-2 665 881**
**US-A-2 921 769**
**US-A-2 984 453**
**US-A-3 031 046**

(73) Titulaire: **SOCIETE NATIONALE D'ETUDE ET DE CONSTRUCTION DE MOTEURS D'AVIATION, "S.N.E.C.M.A."**
· · **2 Boulevard Victor**
**F-75015 Paris (FR)**

(72) Inventeur: **Aubert, Jean-Baptiste Paul Auguste**
**82, rue de Paris**
**F-94220 Charenton (FR)**
Inventeur: **Tirole, Jacques Philippe Henri**
**9, allée des Acacias**
**F-92310 Sevres (FR)**

(74) Mandataire: **Moinat, François et al**
**S.N.E.C.M.A. Service des Brevets Boîte Postale 81**
**F-91003 Evry Cedex (FR)**

EP 0 041 015 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention a pour objet un procédé pour la fabrication d'aubes de turbine refroidies au moyen d'un corps poreux et le produit obtenu suivant ce procédé.

Les aubes de turbine refroidies utilisées actuellement font appel à des artifices de fonderie sophistiqués tels que la présence à l'intérieur des aubes creuses de picots, pontets, ailettes, perturbateurs, etc. Ces organes intérieurs de l'aube sont réalisés à partir de noyaux céramiques compliqués et coûteux qu'il faut ensuite dissoudre après la coulée et qui rend la tâche des fondeurs délicate.

Il est également possible d'obtenir un refroidissement satisfaisant des aubes en remplissant la cavité des aubes creuses d'un matériau poreux qui présente en outre l'avantage de participer à leur tenue mécanique par l'amortissement des vibrations. De telles aubes sont déjà décrites dans le FR—A—972.994.

Des essais ont également été effectués avec un matériau constitué à partir de micro-billes brasées par diffusion, mais, dans un tel matériau, les pertes de charge sont importantes et il faut une très forte pression pour faire circuler l'air de refroidissement.

Par ailleurs, on connait un matériau poreux constitué à partir de copeaux métalliques, et qui a fait l'objet de la publication FR—A—2.435.534, ledit matériau présentant une porosité cinq à six fois plus importante que celle du matériau constitué à partir de billes.

Conformément à la présente invention, on utilise un procédé pour la fabrication d'aubes de turbine refroidies au moyen d'un corps poreux dans lesquelles une cavité dont le fond est muni d'un moyen d'obturation provisoire est remplie d'un mélange constitué d'environ 85 à environ 99,5% en poids de copeaux d'un matériau de base choisi parmi le nickel, le chrome, le tungstène, le molybdène, le fer et le cobalt et les divers alliages de ces métaux, et environ 15 à 0,5% en poids d'un métal auxiliaire fusible choisi parmi l'étain, l'indium, le gallium, le germanium, l'antimoine, ainsi que les mélanges et les alliages desdits métaux, ledit mélange étant soumis à une opération de chauffage afin d'obtenir une liaison des copeaux entre eux et aux parois de l'aube par brasage diffusion au moyen dudit métal fusible, caractérisé en ce que l'aube comporte au moins une cloison verticale et des cloisons s'étendant transversalement, délimitant des cavités remplies de copeaux, qui sont provisoires et dissoutes après l'opération de brasage de manière à laisser une colonne vide dans le matériau poreux utilisé pour alimenter en air les colonnes poreuses.

La forme de ruban et la forme en virgule présentées généralement par les copeaux entraînent plusieurs conséquences favorables à la fois sur la tenue mécanique de l'aube et sur le coefficient d'échange.

En plus de la tenue mécanique on a constaté que le remplissage permet de changer la fréquence de résonance de la masse vibrante. La liaison des deux parois par l'intermédiaire d'un remplissage de copeaux apporte un effet intermédiaire entre celui que l'on obtenait avec des pontets rigides et celui obtenu avec une aube creuse. La masse de remplissage absorbe ici du travail et joue un rôle d'amortisseur, contribuant à éliminer l'effet de vibration relative entre les deux parois.

On notera qu'au cours de l'opération de remplissage les copeaux ont tendance, au voisinage des parois, à s'ordonner de façon à ce que leur côté plat soit en partie au contact de la paroi, offrant ainsi une surface de contact suffisante pour la liaison par brasage diffusion.

Par rapport à l'emploi de micro-billes comme matériau de remplissage on évite un inconvénient qui avait été constaté au moment de l'opération de liaison au moyen d'une poudre constituée de métaux à bas point de fusion. On aboutissait en effet à la formation de petits ménisques entre les sphères, ayant pour effet de diminuer considérablement la porosité.

En ce qui concerne les avantages sur le plan de l'échange thermique, on a constaté que l'effet de conduction métallique apporté par les copeaux peut se superposer à l'effet de convection apporté par la grande surface d'échange offerte, réalisant ainsi un trajet allongé de transfert de la chaleur vers l'air de refroidissement circulant dans la partie centrale de l'aube.

On a constaté enfin que, du fait de leur usinage, les copeaux présentent toujours une surface rayée dont les aspérités forment perturbateurs, cassant la couche limite laminaire qui pourrait abaisser le coefficient d'échange.

Le procédé suivant l'invention permet d'obtenir des aubes présentant un refroidissement aussi performant que celui qu'on obtient actuellement, sans faire appel à des dispositifs compliqués et de réalisation coûteuse. L'augmentation du coefficient d'échange que permet l'utilisation de copeaux métalliques entraîne une diminution du débit nécessaire pour obtenir un $\Delta t$ déterminé pour les aubes.

Enfin, le procédé permet une amélioration de la tenue mécanique des aubes.

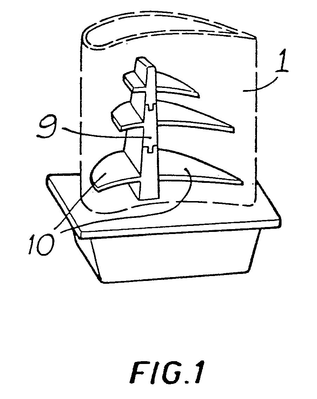

D'autres caractéristiques et avantages de l'invention seront mieux compris à la lecture de la description qui va suivre de plusieurs modes de réalisation et en se référant au dessin annexé, sur lequel:

la figure unique est une vue en perspective d'une aube de turbine refroidie au moyen d'un corps poreux et comportant, conformément à l'invention, des cloisons verticales et transversales, le corps poreux remplissant la cavité à l'intérieur de l'aube.

Le corps poreux est constitué de copeaux réalisés à la fraise ou par tournage ou par tout autre moyen d'usinage dans un matériau métallique très conducteur. En réglant la vitesse de coupe et la profondeur de passe, on obtient des copeaux qui se brisent à une longueur pratiquement uniforme.

Suivant le procédé ayant fait l'objet de la publication FR—A—2.435.534, on mélange les copeaux à une poudre constituée à partir de métaux à bas point de fusion.

Le mélange comporte environ 85 à environ 99,5% en poids de copeaux d'un matériau de base choisi parmi le nickel, le chrome, le tungstène, le molybdène, le fer et le cobalt et les divers alliages de ces métaux, et environ 15 à 0,5% en poids d'un métal auxiliaire fusible choisi parmi l'étain, l'indium, le gallium, le germanium, l'antimoine ainsi que les mélanges et les alliages desdits métaux.

On remplit la cavité de l'aubre avec le mélange défini ci-dessus, après avoir provisoirement obturé le fond de la cavité de l'aube à l'aide d'une plaquette soluble ou d'un montage spécial introduit par le pied de l'aube.

L'aube 1 ainsi remplie de ce mélange est passée au four afin d'obtenir un brasage diffusion des copeaux entre eux et aux parois de l'aube. L'ensemble est chauffé sous une atmosphère contrôlée et en absence de pression, à une température pendant une durée suffisante pour provoquer la fusion et la diffusion du métal fusible dans les copeaux, et dans la paroi de l'aube.

Conformément à l'invention, on dispose dans la cavité de l'aube 1 une cloison axiale 9 ramifiée par des cloisons transversales 10 qui, après dissolution, laissent subsister des espaces pour moduler l'alimentation en air suivant le niveau radial de l'aube. Ces cloisons provisoires 9 et 10 peuvent notamment être en silice, ce qui permet leur dissolution, de manière connue. Il faut noter que par les méthodes de fonderie actuelles la cavité du bord d'attaque est difficile à réaliser en raison de son faible rayon; or, c'est la zone la plus chaude de l'aube. C'est à cet endroit que se situe le point d'arrêt et on peut noter la présence de deux zones d'accélération de part et d'autre de la ligne d'arrêt, cette accélération conduisant à un coefficient d'échange défavorable (davantage de calories cédées à la paroi du bord d'attaque).

Pour une aube fixe, on peut utiliser deux alimentations dont une par le bas et l'autre par le haut.

En outre, le bord d'attaque peut être percé par un procédé électrolytique et cela permet de combiner l'effet de sudation aux effets de conduction et de convection forcée dans le matériau.

## Revendications

1. Procédé pour la fabrication d'aubes de turbine refroidies au moyen d'un corps poreux, dans lesquelles une cavité dont le fond est muni d'un moyen d'obturation provisoire est remplie d'un mélange constitué d'environ 85 à environ 99,5% en poids de copeaux d'un matériau de base choisi parmi le nickel, le chrome, le tungstène, le molybdène, le fer et le cobalt et les divers alliages de ces métaux, et environ 15 à 0,5% en poids d'un métal auxiliaire fusible choisi parmi l'étain, l'indium, le gallium, le germanium, l'antimoine, ainsi que les mélanges et les alliages desdits métaux, ledit mélange étant soumis à une opération de chauffage afin d'obtenir une liaison des copeaux entre eux et aux parois de l'aube par brasage diffusion au moyen dudit métal fusible, caractérisé en ce que l'aube comporte au moins une cloison verticale (9) et des cloisons (10) s'étendant transversalement, délimitant des cavités remplies de copeaux, qui sont provisoires et dissoutes après l'opération de brasage de manière à laisser une colonne vide dans le matériau poreux utilisé pour alimenter en air les colonnes poreuses.

2. Aube de turbine refroidie au moyen d'un corps poreux, situé dans au moins une cavité de l'aube et constitué de copeaux métalliques liés entre eux et à la paroi de l'aube par brasage diffusion au moyen d'un métal fusible, caractérisée en ce qu'elle est obtenue par le procédé conforme à la revendication 1.

3. Aube refroidie suivant la revendication 2, caractérisée en ce qu'elle présente des orifices dans la paroi mettant en communication au moins une cavité avec l'extérieur.

## Patentansprüche

1. Verfahren zur Herstellung von jeweils mittels eines porösen Körpers gekühlten Turbinenschaufeln, in welchen ein Hohlraum, dessen Boden mit einem vorläufigen Verschlußmittel versehen ist, derart mit einer Mischung von ungefähr 85 bis ungefähr 99,5 Gewichtsprozent von Spänen eines Grundmaterials, das aus Nickel, Chrom, Wolfram, Molybdän, Eisen und Kobalt sowie verschiedenartigen Legierungen dieser Metalle ausgewählt ist, und ungefähr 15 bis 0,5 Gewichtsprozent eines schmelzbaren Hilfsmetalls, das aus Zinn, Indium, Gallium, Germanium, Antimon sowie Mischungen und Legierungen dieser Metalle ausgewählt ist, gefüllt ist, die Mischung insgesamt einer Wärmeeinwirkung unterworfen wird, um eine Verbindung der Späne untereinander und mit den Wandungen der Schaufel durch Schmelzdiffusion mittels des schmelzbaren Metalls zu erzielen, dadurch gekennzeichnet, daß die Turbinenschaufel zumindest eine vertikale Trennwand (9) und Trennwände (10) enthält, die sich querlaufend erstrecken, welche Trennwände Hohlräume abgrenzen, die mit den Spänen gefüllt sind, und vorläufige Hilfsmittel darstellen, die sich nach dem Schmelzvorgang auf eine Weise aufgelöst haben, daß ein säulenförmiger Hohlraum in dem porösen Material verbleibt, der benutzt wird, um Luft in poröse Säulen einzuführen.

2. Mittels eines porösen Körpers gekühlte Turbinenschaufel, welcher Körper in zumindest einem Hohlraum der Turbinenschaufel angeordnet ist und aus metallischen Spänen gebildet ist, die miteinander und mit der Wandung der Turbinenschaufel durch Schmelzdiffusion mittels eines schmelzbaren Metalls verbunden sind, dadurch gekennzeichnet, daß sie durch das Verfahren nach Anspruch 1 gewonnen wird.

3. Gekühlte Turbinenschaufel nach Anspruch 2, dadurch gekennzeichnet, daß sie Öffnungen in der Wandung aufweist, die eine Verbindung zumindest eines Hohlraums mit der äußeren Umgebung herstellen.

**Claims**

1. A method of manufacturing turbine blades cooled by means of a porous body, in which blades a cavity, the base of which is provided with a temporary closing means, is filled with a mixture consisting of approximately 85 to approximately 99.5% by weight of particles of a base material selected from nickel, chromium, tungsten, molybdenum, iron and cobalt and various alloys of these metals, and approximately 15 to 0.5% by weight of a fusible auxiliary metal selected from tin, indium, gallium, germanium, antimony, and mixtures and alloys of the said metals, the said mixture being subject to a heating operation in order to effect bonding of the particles together and to the walls of the blade by diffusion brazing by means of the said fusible metal, characterized in that the blade comprises at least one vertical partition (9) and partitions (10) extending transversely, defining cavities filled with the particles, which partitions are temporary and are dissolved after the brazing operation so as to leave an empty column in the porous material used for supplying air to the porous columns.

2. Turbine blade cooled by means of a porous body, disposed in at least one cavity of the blade and consisting of metallic particles bonded together and to the wall of the blade by diffusion brazing by means of a fusible metal, characterized in that it is produced by the method according to claim 1.

3. A blade cooled according to claim 1, characterized in that it comprises orifices in the wall which bring at least one cavity into communication with the outside.

**FIG.1**